# DEMANDE DE BREVET EUROPEEN

(11) **EP 2 019 245 A1**
(43) Date de publication de la demande: **28.01.2009**
(21) Numéro de dépôt: 07301283.3
(22) Date de dépôt: 27.07.2007
(51) Int. Cl.: F16L 23/032

(54) **Bride tourante destinée en particulier à la connexion d'une canalisation sur un compteur**

(71) Demandeur: Actaris SAS, 92100 Boulogne Billancourt (FR)
(72) Inventeur: Jung, Fernand, 67240 Schirrhein (FR); Mathiou, Nicolas, 67500 Haguenau (FR)
(74) Mandataire: Lenne, Laurence

(57) **Abrégé**

Bride tournante de connexion de deux conduites aboutées, constituée de deux parties en forme de demi anneau (1, 2), une première extrémité de chaque partie de bride étant pourvue d'un moyen de liaison, lesdits moyens de liaison coopérant et assurant une libre rotation des deux parties de bride dans leur plan.

Selon l'invention, ces moyens de liaison sont formés d'une seule pièce avec lesdites parties de bride.

## Description

L'invention concerne une bride tournante destinée en particulier à la connexion d'une canalisation, par exemple d'arrivée ou d'évacuation de fluide, sur un compteur de mesure du débit ou du volume de fluide.

A titre d'exemple, un tel compteur est généralement constitué d'une bâche formée d'un corps en forme d'auge destiné à recevoir un élément mesurant ou une chambre mesurante et comportant un tronçon de conduit d'entrée et un tronçon de conduit de sortie du fluide, par exemple d'eau. Le tronçon de conduit d'entrée doit être connecté à une canalisation d'arrivée de fluide et le tronçon de conduit de sortie à une canalisation d'évacuation de fluide.

La connexion de chaque tronçon de conduit avec la canalisation correspondante est réalisée au moyen d'une bride comportant une pluralité d'orifices, correspondants à une pluralité d'orifices analogues portée par une bride solidaire de la canalisation et au travers desquels sont disposés des boulons de serrage et de fixation, avec interposition d'un joint d'étanchéité.

Il peut être utilisé une bride dite fixe, qui est constituée d'une bride annulaire qui est solidarisée au tronçon de conduit correspondant, par exemple par vissage et collage. Une telle bride fixe est décrite par exemple dans le document de brevet WO 01 /20215.

Cette connexion peut également être réalisée au moyen d'une bride dite tournante, constitué de deux parties en forme de demi anneau, qui, une fois, disposés et bloqués en translation à l'extrémité du tronçon de conduit sont fixés à leur extrémité par rivetage ou sertissage.

Cette seconde conception de brides facilite le montage sur des compteurs quelle que soit le positionnement de ce dernier.

Cependant, la solidarisation des deux demi brides par rivets sertis est une opération qui tend à rendre la bride monobloc et qui est une opération de montage supplémentaire.

L'invention concerne donc une bride tournante qui puisse être mise en place sans une telle opération de solidarisation, de façon simple et rapide.

Pour ce faire, l'invention propose une bride tournante de connexion de deux conduites aboutées, constituée de deux parties en forme de demi anneau, une première extrémité de chaque partie de bride étant pourvue d'un moyen de liaison, lesdits moyens de liaison coopérant et assurant une libre rotation des deux parties de bride dans leur plan, caractérisée en ce que ces moyens de liaison sont formés d'une seule pièce avec lesdites parties de bride.

Selon un mode de réalisation préféré, lesdits moyen de liaison sont des moyens d'emboîtement dans la direction de l'axe central de la bride.

De préférence, lesdits moyens de liaison comportent un tenon porté par l'une des dites parties de bride et un orifice d'emboîtement de ce tenon, porté par l'autre partie de bride.

Un anneau d'arrêt peut être disposé sur ledit tenon, une fois emboîté dans ledit orifice.

Avantageusement, une seconde extrémité de chaque partie est pourvue d'un moyen de butée dans le plan de la bride.

De préférence, lesdits moyens de butée comporte un méplat formé sur l'une desdites parties de bride et d'une bride d'extrémité porté par l'autre desdites parties de bride.

La bride peut comporter des alésages pour la connexion avec une autre bride, conçus de façon universelle.

De préférence, la bride est destinée à la connexion d'un tronçon de conduit d'un compteur de fluide avec d'une canalisation d'arrivée ou d'évacuation de fluide.

L'invention est décrite ci-après plus en détail à l'aide de figures ne représentant qu'un mode de réalisation préféré de l'invention.
La figure 1 est une vue en perspective d'une bride conforme à l'invention.
La figure 2 est une vue en coupe de détail.
La figure 3 est une vue en perspective d'une bâche de compteur équipé d'une bride conforme à l'invention.

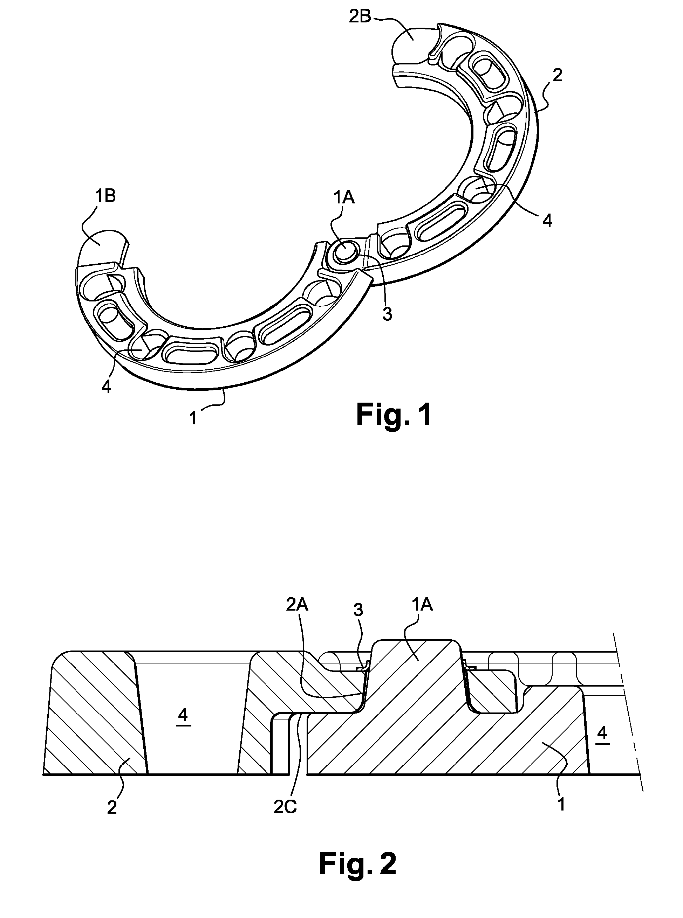

Comme illustré sur les figures 1 et 2, une bride tournante conforme à l'invention, de connexion de deux conduites aboutées est constituée de deux parties 1, 2 en forme de demi anneau, dont une première extrémité est pourvue d'un moyen de liaison. Ces moyens de liaison coopèrent et assurent une libre rotation des deux parties de bride 1, 2 dans leur plan et sont formés d'une seule pièce avec les parties de bride.

Ces moyens de liaison sont des moyens d'emboîtement dans la direction de l'axe central de la bride et comportent un tenon 1A porté par l'une des parties de bride 1 et un orifice 2A d'emboîtement de ce tenon, porté par l'autre partie de bride 2. L'orifice 2A est formé dans un méplat 2C disposé à l'extrémité de la partie de bride 2 et qui vient buter contre la face portant le tenon 1A.

Un anneau d'arrêt 3 peut être disposé sur le tenon 1A, une fois emboîté dans l'orifice 2A.

L'autre extrémité de chaque partie de bride 1, 2 est pourvue d'un moyen de butée dans le plan de la bride. Il s'agit d'un méplat 2B formé sur l'une des parties de bride 2 et d'une bride d'extrémité 1B porté par l'autre des parties de bride 1.

La bride comporte des alésages 4 pour la connexion avec une autre bride, conçus de façon universelle. Ces alésages peuvent êtres des alésages oblongs à diamètre variable.

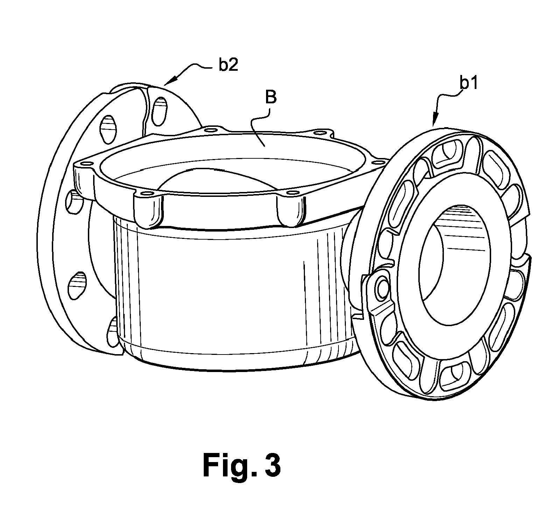

De préférence, la bride est destinée à la connexion d'un tronçon de conduit d'un compteur de fluide avec une canalisation d'arrivée ou d'évacuation de fluide. Sur la figure 3, il est représenté une bâche B de compteur sur laquelle sont montées deux brides conforme à l'invention, l'une b₁ sur le tronçon de conduit d'entrée de la bâche et l'autre b₂ sur le tronçon de sortie de la bâche.

Une bride conforme à l'invention est montée comme suit.

Le tenon 1A d'une première partie de bride 1 demi annulaire est introduit dans l'orifice correspondant 2A d'une seconde de bride 2 demi annulaire, comme illustré sur la figure 1. Ainsi ouverte, la bride est disposée dans une rainure ou équivalent formée sur le tronçon de conduit, puis est fermée, afin d'y être bloquée en translation. Lors de cette fermeture, la bride d'extrémité 1B de la première partie de bride 1 vient buter par translation contre le méplat 2B de la seconde partie de bride 2.

Optionnellement, un anneau d'arrêt 3 peut être mis en place après emboîtement du tenon 1A dans l'orifice 2A correspondant.

La bride tournante ainsi formée peut alors être aboutée avec une bride solidarisée à une canalisation et fixée avec des boulons de serrage et de fixation mis en place dans les alésages 4 et les alésages correspondants de l'autre bride, avec interposition d'un joint d'étanchéité.

## Revendications

1. Bride tournante de connexion de deux conduites aboutées, constituée de deux parties en forme de demi anneau (1, 2), une première extrémité de chaque partie de bride étant pourvue d'un moyen de liaison, lesdits moyens de liaison coopérant et assurant une libre rotation des deux parties de bride dans leur plan, **caractérisée en ce que** ces moyens de liaison sont formés d'une seule pièce avec lesdites parties de bride.

2. Bride selon la revendication précédente, **caractérisée en ce que** lesdits moyen de liaison sont des moyens d'emboîtement dans la direction de l'axe central de la bride.

3. Bride selon la revendication précédente, **caractérisée en ce que** lesdits moyens de liaison comportent un tenon (1A) porté par l'une des dites parties de bride (1) et un orifice (2A) d'emboîtement de ce tenon, porté par l'autre partie de bride (2).

4. Bride selon la revendication précédente, **caractérisée en ce qu'**un anneau d'arrêt (3) est disposé sur ledit tenon (1A), une fois emboîté dans ledit orifice (2A).

5. Bride selon l'une des revendications précédentes, **caractérisée en ce que** qu'une seconde extrémité de chaque partie est pourvue d'un moyen de butée dans le plan de la bride.

6. Bride selon la revendication précédente, **caractérisé en en ce que** lesdits moyens de butée comporte un méplat (2B) formé sur l'une desdites parties de bride (2) et d'une bride d'extrémité (1B) porté par l'autre desdites parties de bride (1).

7. Bride selon l'une des revendications précédentes, **caractérisée en ce qu'**elle comporte des alésages (4) pour la connexion avec une autre brides ces alésages étant conçus de façon universelle.

8. Bride selon l'une des revendications précédentes, **caractérisée en ce qu'**elle est destinée à la connexion d'un tronçon de conduit d'un compteur de fluide avec d'une canalisation d'arrivée ou d'évacuation de fluide.

## Revendications modifiées

### Revendications modifiées conformément à la règle 137(2) CBE.

**1.** Bride tournante de connexion de deux conduites aboutées, constituée de deux parties en forme de demi anneau (1, 2), une première extrémité de chaque partie de bride étant pourvue d'un moyen de liaison, lesdits moyens de liaison coopérant et assurant une libre rotation des deux parties de bride dans leur plan, ces moyens de liaison étant formés d'une seule pièce avec lesdites parties de bride, bride **caractérisée en ce qu'**elle comporte des alésages (4) pour la connexion avec une autre bride, ces alésages étant conçus de façon universelle.

**2.** Bride selon la revendication précédente, **caractérisée en ce que** lesdits moyens de liaison sont des moyens d'emboîtement dans la direction de l'axe central de la bride.

**3.** Bride selon la revendication précédente, **caractérisée en ce que** lesdits moyens de liaison comportent un tenon (1A) porté par l'une des dites parties de bride (1) et un orifice (2A) d'emboîtement de ce tenon, porté par l'autre partie de bride (2).

**4.** Bride selon la revendication précédente, **caractérisée en ce qu'**un anneau d'arrêt (3) est disposé sur ledit tenon (1A), une fois emboîté dans ledit orifice (2A).

**5.** Bride selon l'une des revendications précédentes, **caractérisée en ce que** qu'une seconde extrémité de chaque partie est pourvue d'un moyen de butée dans le plan de la bride.

**6.** Bride selon la revendication précédente, **caractérisé en** en ce que lesdits moyens de butée comporte un méplat (2B) formé sur l'une desdites parties de bride (2) et d'une bride d'extrémité (1B) porté par l'autre desdites parties de bride (1).

**7.** Bride selon l'une des revendications précédentes, **caractérisée en ce qu'**elle est destinée à la connexion d'un tronçon de conduit d'un compteur de fluide avec d'une canalisation d'arrivée ou d'évacuation de fluide.
